# EUROPÄISCHE PATENTANMELDUNG

(11) **EP 2 886 279 A1**
(43) Veröffentlichungstag der Anmeldung: **24.06.2015**
(21) Anmeldenummer: 14199400.4
(22) Anmeldetag: 19.12.2014
(51) Int. Cl.: B28D 1/18, B23D 47/08, B27B 9/02, B27F 5/02, B23C 1/20

(54) **Handarbeitsgerät**

(30) Priorität: 21.12.2013 DE 102013021777
(71) Anmelder: Popp, Siegfried, 88074 Meckenbeuren (DE)
(72) Erfinder: Popp, Siegfried, 88074 Meckenbeuren (DE)
(74) Vertreter: Otten, Roth, Dobler & Partner

(57) **Zusammenfassung**

Handarbeitsgerät (1), insbesondere zum Durchtrennen und/oder Schleifen von Materialien zum Ausbau von im Mauerwerk eingebauten Fenstern und Türen oder dergleichen, dadurch gekennzeichnet,das an dem Handarbeitsgerät (1) mindestens ein Handgriff (10) vorgesehen ist, wobei der Handgriff (10) aus mindestens zwei Teilen (11,12) besteht und ein erster Teil (11) des Handgriffs (10) am Antriebsmotor (2) und/oder dem Führungsschlitten (5) befestigt, insbesondere angelenkt ist, und wobei ein zweiter Teil (12) des Handgriffs (10) am Gehäuse (4) befestigt, insbesondere angelenkt ist, und wobei die beiden Teile (11,12) des Handgriffs (10) derart relativ zueinander bewegbar sind, dass eine Bewegung der Teile (11,12) des Handgriffs (10) eine Relativbewegung der Frässcheibe (3) zum Gehäuse (4) bewirkt.

## Beschreibung

Die Erfindung betrifft ein Handarbeitsgerät zum Schleifen und Durchtrennen von Materialien, insbesondere im Bereich der Gebäudesanierungen.

Bekannte Handarbeitsgeräte in Form von Montagesägen sind robuste und leistungsstarke Maschinen für die unterschiedlichsten Anwendungsbereiche, insbesondere in der Renovierung und Sanierung von Gebäuden. Der enorme Vorteil ist das nahezu staubfrei Arbeiten, da die Trennscheibe in einem geschlossenen Gehäuse läuft. Durch die ergonomische Gestaltung der Maschine ist eine schonende Haltung während des Arbeitens möglich. Zudem wird die Gefahr eines Kabelbruchs reduziert.

Anwendungsgebiete sind das Herauslösen von Altfenstern, ohne Beschädigungen und staubfrei. Auch Rollladenkästen zurechtschneiden, z.B. beim Wechsel von Holz zu Kunststofffenstern mit größerem Rahmendurchmesser. In einer bekannten Ausführungsform ist der Motor um 180° stufenlos schwenkbar, für optimale Ergonomie insbesondere bei längeren Schnitten sowie zur besseren Zugänglichkeit bei schmalen Fensterleibungen.

Alternativ sind auch aus einer Vielzahl anderer Anwendungen Handarbeitsgeräte bekannt, bei denen Werkzeuge wir Trennscheiben, Fräser, Sägeblätter oder Bohrer in einem geschlossenen Gehäuse aufgenommen sind, und durch Versatz des Gehäuses relativ zum Werkzeug ein Austritt des Werkzeugs für einen Bearbeitungsvorgang ermöglicht wird.

Nachteilig ist, dass der Handwerker stets gegen eine Rückstellkraft der Gehäusemechanik arbeiten muss, welche zum Austritt des Werkzeugs, insbesondere der Trennscheibe bzw. Frässcheibe aus dem Gehäuse zu überwinden ist.

Aufgabe ist es, diesen Nachteil insbesondere während eines Arbeitsvorganges zu vermeiden.

Die Erfindung ist ein Handarbeitsgerät, insbesondere zum Durchtrennen und/oder Schleifen von Materialien zum Ausbau von im Mauerwerk eingebauten Fenstern und Türen oder dergleichen, umfassend einen Antriebsmotor, eine Frässcheibe, die mit dem Antriebsmotor über eine Welle zum Antrieb verbunden ist, ein die Frässcheibe umschließenden Gehäuse, mindestens einen Führungsschlitten, der auf der dem Antriebsmotor zugwandten Gehäuseseite des Gehäuses (5) angeordnet ist, wobei der Antriebsmotor und damit die Frässcheibe über den Führungsschlitten derart in Richtung einer Austrittsöffnung für die Frässcheibe an dem Gehäuse verschiebbar ist, dass die Frässcheibe zumindest teilweise aus dem Gehäuse zur Durchführung einer Schneid- bzw. Fräsarbeit herausragt. Die Erfindung ist dadurch gekennzeichnet, das an dem Handarbeitsgerät mindestens ein Handgriff vorgesehen ist, wobei der Handgriff aus mindestens zwei Teilen besteht und ein erster Teil des Handgriffs am Antriebsmotor und/oder dem Führungsschlitten befestigt, insbesondere angelenkt ist, und wobei ein zweiter Teil des Handgriffs am Gehäuse befestigt, insbesondere angelenkt ist, und wobei die beiden Teile des Handgriffs derart relativ zueinander bewegbar sind, dass eine Bewegung der Teile des Handgriffs eine Relativbewegung der Frässcheibe zum Gehäuse bewirkt.

Durch die zweiteilige Ausführung des Handgriffs ist erzielt, dass der Handwerker mit einer Führungshand am Griff die Haltekraft für die Rückstellung des Gehäuses überwindet und damit ein entspannteres Arbeiten ermöglicht wird.

Als Handarbeitsgeräte im Sinne der Erfindung sind nicht abschließend ebenfalls Fräsen (z.B. Flachfübelfräsen, Mauernutfräsen etc.) oder Bohranordnungen (Kernlochbohrer) zu verstehen. Relevant ist dabei, dass ein Werkzeug in Form einer Frässcheibe, eines Sägeblatts, eines Bohrers oder einer Trennscheibe in einem Gehäuse aufgenommen wird. Zur Durchführung einer Bearbeitung muss das Werkzeug aus dem Gehäuse heraustreten, um mit einem Werkstück in Kontakt gebracht werden zu können.

Ein erheblicher Vorteil der Erfindung liegt darin, dass die Frässcheibe (oder das Werkzeug) gefahrlos herausgefahren werden kann, da eine Hand der Bedienperson am Handgriff-Vorschubhebel ist und die andere Hand am Motor liegt, um den Betriebsschalter zu betätigen. Somit kann die Frässcheibe (oder das Werkzeug) auch herausgefahren werden, ohne das die Maschine angesetzt werden muss. Dadurch sieht man genau, wo die Frässcheibe oder das Werkzeug angesetzt wird, z.B. an einem Anriss o.ä..Auf diese Weise kann das Werkzeug wie einen Winkelschleifer (Flex) benutzt werden, beispielsweise um etwas abzutrennen oder abzuschleifen.

Eine vorteilhafte Ausführungsform sieht vor, dass eine Arretierung zur zeitweisen Verhinderung oder Hemmung einer Relativbewegung zwischen dem ersten Teil des Handgriffs und dem zweiten Teil des Handgriffs vorgesehen ist, wobei die Arretierung durch eine Betätigung per Hand der Bedienperson des Handarbeitsgeräts, insbesondere durch einen Knopf oder einen Hebel am Handgriff, aktivierbar und/oder deaktivierbar ist. Wir das Werkzeug durch die erfindungsgemäße Ausgestaltung des Handgriffst aus dem Gehäuse herausgefahren und soll es für einen Arbeitsvorgang in dieser Position verbleiben, ist die Arretierung dazu geeignet, das aufzubringende Haltemoment mit der Hand der Bedienperson an den Teilen des Handgriffs zu verringern (als Bremsvorgang) oder gar zu vermeiden. Auf diese Weise wird ein kraftsparendes Arbeiten ermöglicht. Dies kann durch einen Knopf, bespielsweise an der Seite, der die beiden Teile des Handgriffs formschlüssig miteinander verbindet oder durch einen übergreifenden Hebel, der die beiden Teile des Handgriffs übergreift und zueinander fixiert, erzielt werden. Auch formschlüssig ineinander greifende Handgriffteile sind dabei denkbar.

Als Weiterbildung, insbesondere hinsichtlich der Betriebssicherheit ist vorgesehen, dass die Arretierung über eine Rückstellkraft verfügt, insbesondere federbelastet ist derart, dass beim Loslassen des Handgriffs die Arretierung gelöst wird und das Werkzeug in das Gehäuse (4) zurückgezogen wird. Auf diese Weise wird sichergestellt, dass ein Ablegen des Handarbeitsgeräts oder ein Fallenlassen nicht dazu führt, dass das Werkzeug, beispielsweise eine Frässcheibe, frei liegt und daran Verletzungen auftreten können.

Die weiteren vorteilhaften Ausführungsformen sowie zweckmäßigen Weiterbildungen sind in den abhängigen Ansprüchen sowie den nachfolgenden Figuren beschrieben. Die dargestellten Ausführungsbeispiele sind jedoch nicht abschließend für die nach den erfindungsgemäßen Merkmalen möglichen Ausführungsformen.

Es zeigen:
- Fig. 1: Ein Handarbeitsgerät mit drehfixiertem Motor in perspektivischer Darstellung;
- Fig. 2: Ein Handarbeitsgerät mit drehfixiertem Motor in seitlicher Darstellung mit eingefahrener Frässcheibe;
- Fig. 3: Ein Handarbeitsgerät mit drehfixiertem Motor in seitlicher Darstellung mit ausgefahrener Frässcheibe;
- Fig. 4: Ein Handarbeitsgerät mit drehbarem Motor in perspektivischer Darstellung;
- Fig. 5: Ein Handarbeitsgerät mit drehbarem Motor in seitlicher Darstellung mit eingefahrener Frässcheibe;
- Fig. 6: Ein Handarbeitsgerät mit drehbarem Motor in seitlicher Darstellung mit ausgefahrener Frässcheibe.

Im Einzelnen ist das Handarbeitsgerät (1), mit einem Antriebsmotor (2), einer Frässcheibe (3), die mit dem Antriebsmotor über eine Welle (Wellenachse (40))zum Antrieb verbunden ist, einem die Frässcheibe (3) umschließenden Gehäuse (4), mindestens einem Führungsschlitten (5), der auf der dem Antriebsmotor zugewandten Gehäuseseite (6) des Gehäuses (4) angeordnet ist, wobei der Antriebsmotor (2) und damit die Frässcheibe (3) über den Führungsschlitten (5) derart in Richtung einer Austrittsöffnung (7) für die Frässcheibe (3) an dem Gehäuse (4) verschiebbar ist, dass die Frässcheibe (3) zumindest teilweise aus dem Gehäuse (4) zur Durchführung einer Schneid- bzw. Fräsarbeit herausragt, ausgestattet. Weiterhin ist an dem Handarbeitsgerät (1) mindestens ein Handgriff (10) vorgesehen ist, wobei der Handgriff (10) aus mindestens zwei Teilen (11,12) besteht und ein erster Teil (11) des Handgriffs (10) am Antriebsmotor (2) und/oder dem Führungsschlitten (5) befestigt, insbesondere angelenkt ist, und wobei ein zweiter Teil (12) des Handgriffs (10) am Gehäuse (4) befestigt, insbesondere angelenkt ist, und wobei die beiden Teile (11,12) des Handgriffs (10) derart relativ zueinander bewegbar sind, dass eine Bewegung der Teile (11,12) des Handgriffs (10) eine Relativbewegung der Frässcheibe (3) zum Gehäuse (4) bewirkt.

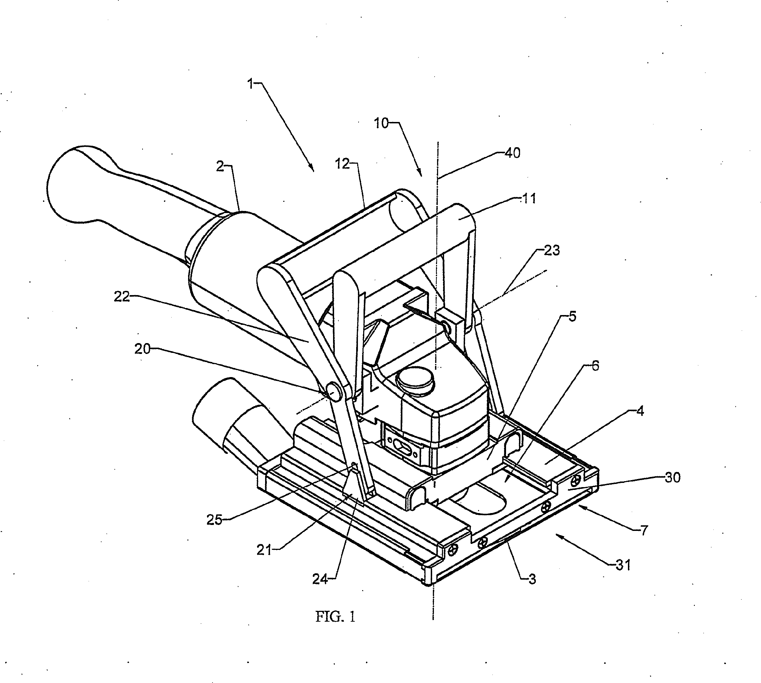

In der Ausführungsform nach Figuren 1 bis 3 ist das Handarbeitsgerät (1) dadurch gekennzeichnet, dass der erste Teil (11) des Handgriffs (10) starr am Motor (2) befestigt ist. Die Konstruktion wird dadurch vereinfacht, jedoch ist ein Verdrehen des Motors (2) relativ zum Gehäuse (4) nicht möglich.

Es ist vorgesehen, dass Umlenkungsmittel (20, 21) , welche mit dem anderen Teil des Handgriff verbunden sind, durch eine Bewegung der Teile des Handgriffs relativ zueinander das Gehäuse relativ zur Frässcheibe (3) verschiebt. Auf diese Weise können die gegenläufigen Bewegungen der Vorschubbewegung des 2. Teils (12) des Handgriffs (10) und der Rückzug des Gehäuses (4) miteinander in der Richtung gekoppelt werden, in welcher der Arbeiter das Handarbeitsgerät (1) bei einem Schnitt drückt.

Diese Umlenkungsmittel (20, 21) sind in einer Ausführungsform von mechanischen Mitteln gebildet und können bevorzugt ein Hebelgelenk umfassen. Der Hebel (22) wird dabei an einer Gelenkachse (23) umgelenkt und nimmt einen Gehäusevorsprung bzw. einen Zapfen (24)in einem Langloch (25) auf. Die notwendige Führung zur Bewegung des Gehäuses (4) relativ zum Motor (2) und damit relativ zur Frässcheibe (3) wird damit einfach bewerkstelligt. Das Langloch (25) kompensiert den Abstandsversatz aufgrund der Bewegungsbahn des unteren Endes des Hebels (22).

In einer alternativen, vorliegend nicht dargestellten Ausführungsform können die mechanischen Mittel eine Verzahnung, insbesondere eine Zahnstange und/oder ein Zahnrad umfassen. Dabei wird durch die Bewegung eines Anteils des Handgriffs eine Verzahnung in Form eines Zahnrads, einer Zahnstange, eines Zahnkranzes oder dergleichen an einer der Gelenkachse 23 entsprechenden Aufhängung erzeigt. Ein korrespondierendes Verzahnungselement auf der oberen Gehäuseseite (6) oder am Gehäuse (4) wird damit in Eingriff gebracht und auf diese Weise das Gehäuse relativ zur Frässcheibe bewegt. Diese Ausführung bietet konstruktiv alternative Möglichkeiten und kann beispielsweise auch laterale Verschwenkungen durch Anpassung der Zahnstruktur an die Schwenkbahn erlauben.

Das erfindungsgemäße Handarbeitsgerät (1) umfasst in einer überdies bevorzugten Ausführung Mittel zur zeitweisen Verhinderung einer Relativbewegung zwischen dem ersten Teil (11) des Handgriffs (10) und dem zweiten Teil (12) des Handgriffs (10). Die Mittel sind durch einen Betriebszustand des Handarbeitsgeräts, insbesondere das Ansetzen an ein zu bearbeitendes Werkstück, deaktivierbar. Dadurch wird verhindert, dass die Frässcheibe (3) aus dem Gehäuse (4) austritt, ohne dass ein Schnitt ausgeführt wird, was anderenfalls eine erhebliche Verletzungsgefahr mit sich bringen würde. In der dargestellten Ausführung ist eine Druckplatte (30) vorgesehen, welche die Verriegelung der Zeile (11,12) des Handgriffs (10) bedient, sobald das Handarbeitsgerät (1) mit seiner vorderen Gehäuseseite (31) an eine Schnittfläche angesetzt wird, um einen Schnitt auszuführen. Es sind aber auch Ausführungen denkbar, bei welchen diese Mittel anderweitig, beispielsweise durch einen Sicherheitstaster, eine Zweihandbedienung oder einen anderweitigen Mechanismus (Pass-Stift ect.) an der vorderen Gehäuseseite (31) ausgelöst werden.

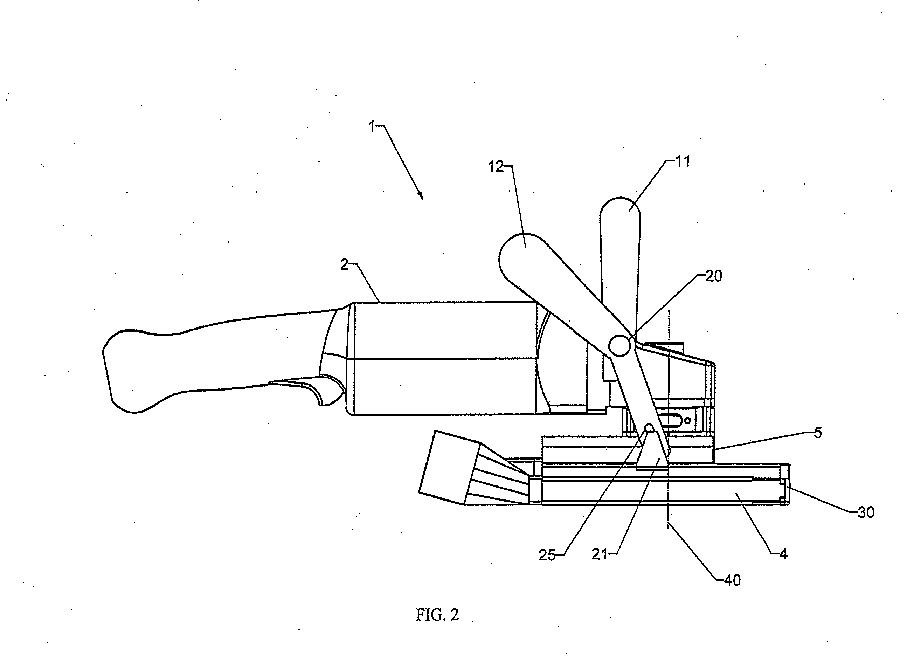

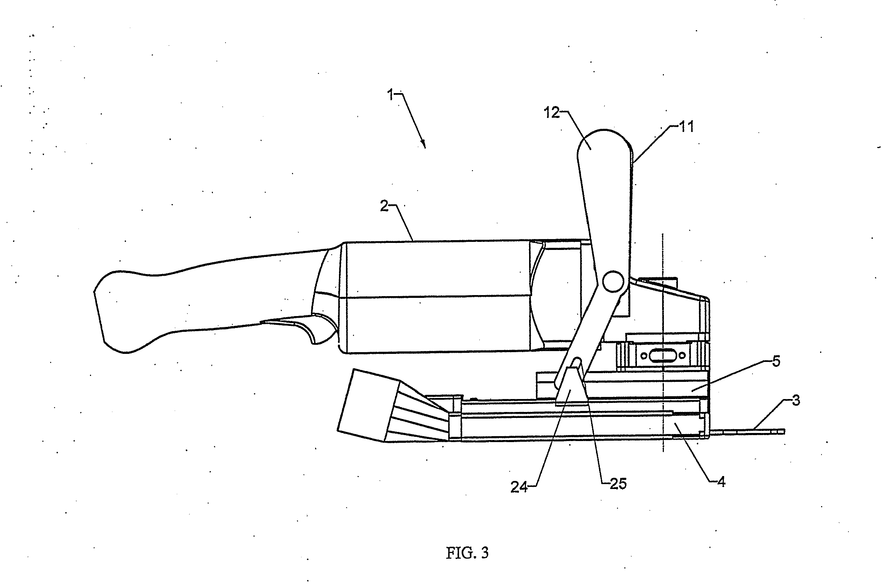

Die Figuren 2 und 3 zeigen die Zustände der eingefahrenen und ausgefahrenen Frässcheibe (3). Figur 2 zeigt die eingefahrene Frässcheibe (3) und voneinander beabstandeten Teile (11,12) des Handgriffs (10). Der Führungsschlitten (5) befindet sich an der hinteren Position. Figur 3 zeigt die ausgefahrene Frässcheibe (3) und aufeinander liegende Teile (11,12) des Handgriffs (10). Der Führungsschlitten (5) befindet sich an der vorderen Position.

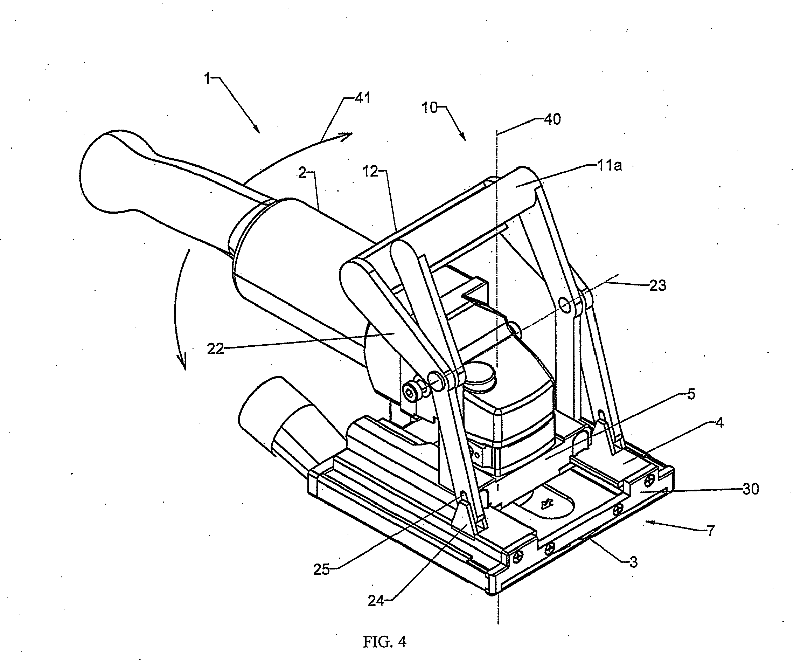

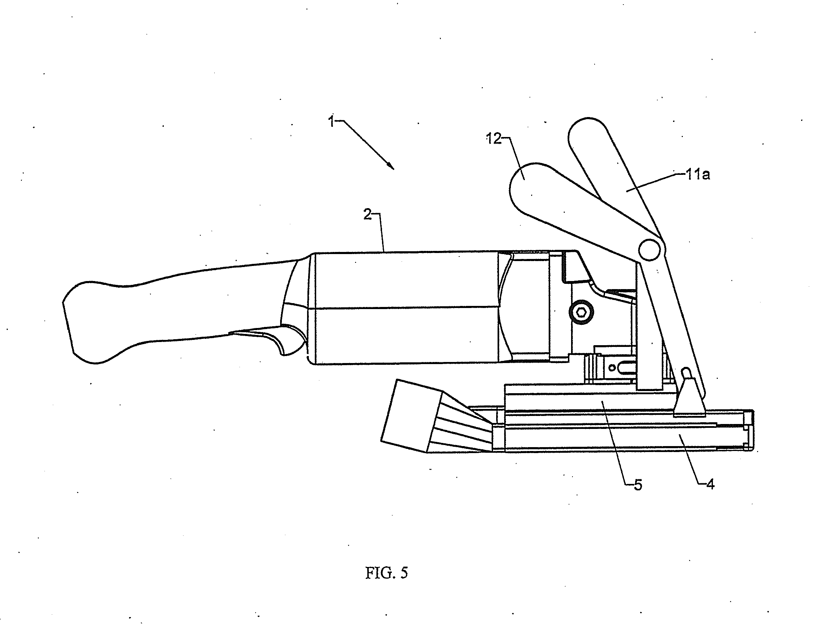

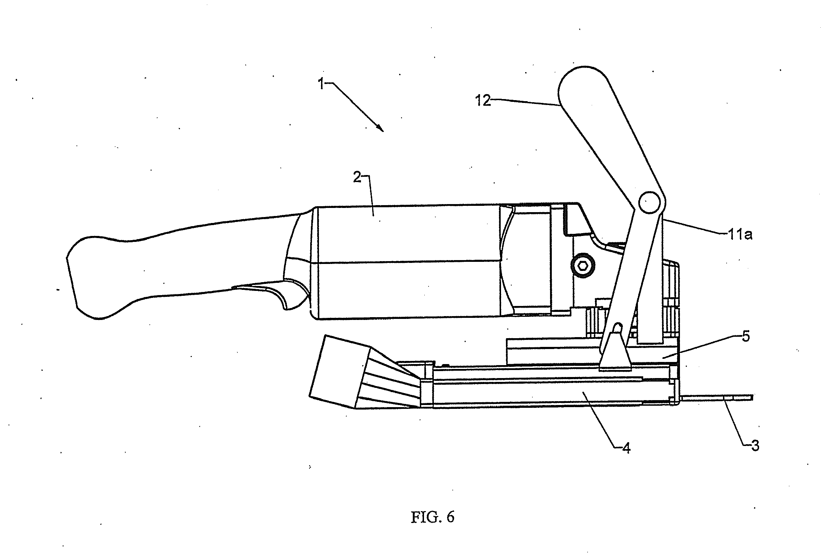

Die Figuren 3-6 zeigen eine alternative Ausführung des Handarbeitsgeräts (1), bei welcher der Motor (2) gegenüber dem Führungsschlitten (5) verschwenkbar ist, um eine bessere Ergonomie zur Verfügung zu stellen. Der Motor (2) ist dabei um die Wellenachse (40) auf einem Kreissegment (41) schwenkbar

Der erste Teil (11a) des Handgriffs (10) ist dabei nicht am Motor (2) sondern am Führungsschlitten (5) angelenkt. Die sonstigen Ausführungen entsprechen der oben dargelegten Figurenbeschreibung.

### Bezugszeichenliste:

- 1: Handarbeitsgerät
- 2: Antriebsmotor
- 3: Frässcheibe
- 4: Gehäuse
- 5: Führungsschlitten
- 6: obere Gehäusehälfte
- 7: Austrittsöffnung

- 10: Handgriff
- 11: erster Teil des Handgriffs
- 11a: erster Teil des Handgriffs
- 12: zweiter Teil des Handgriffs

- 20: Umlenkungsmittel
- 21: Umlenkungsmittel
- 22: Hebel
- 23: Gelenkachse
- 24: Gehäusevorsprung mit Zapfen
- 25: Langloch

- 30: Druckplatte
- 31: vordere Gehäuseseite

- 40: Wellenachse
- 41: Kreissegment / Schwenkbahn

## Patentansprüche

1. Handarbeitsgerät (1), insbesondere zum Durchtrennen und/oder Schleifen von Materialien zum Ausbau von im Mauerwerk eingebauten Fenstern und Türen oder dergleichen, umfassend:
- einen Antriebsmotor (2)
- ein Werkzeug, insbesondere eine Frässcheibe (3), welches mit dem Antriebsmotor über eine Welle zum Antrieb verbunden ist,
- ein das Werkzeug, insbesondere die Frässcheibe (3) umschließenden Gehäuse (4),
- mindestens einen Führungsschlitten (5), der auf der dem Antriebsmotor zugewandten Gehäuseseite (6) des Gehäuses (4) angeordnet ist,
- wobei der Antriebsmotor (2) und damit das Werkzeug, insbesondere die Frässcheibe (3) über den Führungsschlitten (5) derart in Richtung einer Austrittsöffnung (7) für das Werkzeug, insbesondere die Frässcheibe (3) an dem Gehäuse (4) verschiebbar ist, so dass das Werkzeug, insbesondere die Frässcheibe (3) zumindest teilweise aus dem Gehäuse (4) zur Durchführung einer Bearbeitung, insbesondere Schneid- bzw. Fräsarbeit herausragt,
**dadurch gekennzeichnet**,
das an dem Handarbeitsgerät (1) mindestens ein Handgriff (10) vorgesehen ist, wobei der Handgriff (10) aus mindestens zwei Teilen (11,12) besteht und ein erster Teil (11) des Handgriffs (10) am Antriebsmotor (2) und/oder dem Führungsschlitten (5) befestigt, insbesondere angelenkt ist, und wobei ein zweiter Teil (12) des Handgriffs (10) am Gehäuse (4) befestigt, insbesondere angelenkt ist, und wobei die beiden Teile (11,12) des Handgriffs (10) derart relativ zueinander bewegbar sind, dass eine Bewegung der Teile (11,12) des Handgriffs (10) eine Relativbewegung des Werkzeugs, insbesondere der Frässcheibe (3) zum Gehäuse (4) bewirkt.

2. Handarbeitsgerät nach Anspruch 1, **dadurch gekennzeichnet, dass** der erste Teil des Handgriffs starr am Motor befestigt ist.

3. Handarbeitsgerät nach Anspruch 1 oder 2, **dadurch gekennzeichnet, dass** ein Teil des Handgriffs über mechanische Umlenkungsmittel, welche mit dem anderen Teil des Handgriff verbunden sind, durch eine Bewegung der Teile des Handgriffs relativ zueinander das Gehäuse relativ zur Frässcheibe verschiebt.

4. Handarbeitsgerät nach Anspruch 3, **dadurch gekennzeichnet, dass** die mechanischen Mittel ein Hebelgelenk umfassen.

5. Handarbeitsgerät nach Anspruch 3 oder 4, **dadurch gekennzeichnet, dass** die mechanischen Mittel eine Verzahnung, insbesondere eine Zahnstange und/oder ein Zahnrad umfassen.

6. Handarbeitsgerät nach Anspruch 3,4 oder 5, **dadurch gekennzeichnet, dass** die mechanischen Mittel eine Umkehr der Bewegungsrichtung bewirken.

7. Handarbeitsgerät nach einem der vorangegangenen Ansprüche, **dadurch gekennzeichnet, dass** Mittel zur zeitweisen Verhinderung einer Relativbewegung zwischen dem ersten Teil des Handgriffs und dem zweiten Teil des Handgriffs vorgesehen sind, wobei die Mittel durch einen Betriebszustand des Handarbeitsgeräts, insbesondere das Ansetzen an ein zu bearbeitendes Werkstück oder durch Betätigung einer Entriegelung mit einer Hand, deaktivierbar sind.

8. Handarbeitsgerät nach Anspruch 7, **dadurch gekennzeichnet, dass** das Mittel zur Verhinderung der Relativbewegung zwischen dem ersten Teil des Handgriffs und dem zweiten Teil des Handgriffs eine Sperrklinke ist.

9. Handarbeitsgerät nach Anspruch 7 oder 8, **dadurch gekennzeichnet, dass** das Mittel zur Verhinderung der Relativbewegung zwischen dem ersten Teil des Handgriffs und dem zweiten Teil des Handgriffs über einen verschiebbar gelagerten Passstift mit Rückstellkraft oder eine federbelastete Drucktaste an der Austrittsseite des Werkzeugs, insbesondere der Frässcheibe durch dessen Betätigung entriegelt werden, beispielsweise durch gekoppelte Bewegung eines Sperrriegels.

10. Handarbeitsgerät nach Anspruch 7,8 oder 9, **dadurch gekennzeichnet, dass** das Mittel zur Verhinderung der Relativbewegung zwischen dem ersten Teil des Handgriffs und dem zweiten Teil des Handgriffs ein Drucktaster ist, wobei der Drucktaster insbesondere an einem Teil des Handgriffs angeordnet ist und ein Gelenk zwischen den Teilen des Handgriffs blockiert.

11. Handarbeitsgerät nach einem der vorangegangenen Ansprüche, **dadurch gekennzeichnet, dass** eine Arretierung zur zeitweisen Verhinderung oder Hemmung einer Relativbewegung zwischen dem ersten Teil des Handgriffs und dem zweiten Teil des Handgriffs vorgesehen ist, wobei die Arretierung durch eine Betätigung per Hand der Bedienperson des Handarbeitsgeräts, insbesondere durch einen Knopf oder einen Hebel am Handgriff, aktivierbar und/oder deaktivierbar ist.

12. Handarbeitsgerät nach Anspruch 11, **dadurch gekennzeichnet, dass** die Arretierung über eine Rückstellkraft verfügt, insbesondere federbelastet ist derart, dass beim Loslassen des Handgriffs die Arretierung gelöst wird und das Werkzeug in das Gehäuse (4) zurückgezogen wird.
